# EUROPEAN PATENT SPECIFICATION

(11) **EP 3 121 514 B1**
(45) Date of publication and mention of the grant of the patent: **17.10.2018**
(21) Application number: 15765940.0
(22) Date of filing: 18.03.2015
(51) Int. Cl.: H01M 8/04014, H01M 8/0612

(54) **COMBUSTOR AND FUEL CELL SYSTEM**
BRENNKAMMER UND BRENNSTOFFZELLENSYSTEM
CHAMBRE DE COMBUSTION ET SYSTÈME DE PILE À COMBUSTIBLE

(30) Priority: 19.03.2014 JP 2014055808
(43) Date of publication of application: 25.01.2017
(73) Proprietor: Sumitomo Precision Products Co., Ltd., Hyogo 660-0891 (JP)
(72) Inventor: ORISHIMA Hiroshi, Amagasaki-shi Hyogo 660-0891 (JP); DOI Akihito, Amagasaki-shi Hyogo 660-0891 (JP)
(74) Representative: Blodig, Wolfgang
(86) International application number: PCT/JP2015/057982
(87) International publication number: WO 2015/141707

(56) References cited:
- EP-A1- 0 920 064
- EP-A1- 1 617 140
- EP-A2- 1 724 524
- JP-A- H09 296 913
- JP-A- H09 296 913
- JP-A- S63 194 113
- JP-A- 2002 255 504
- JP-A- 2007 128 680
- JP-A- 2007 157 407
- JP-A- 2009 120 448
- JP-U- H0 194 725
- JP-U- H01 117 432
- JP-U- S50 105 042
- JP-U- S50 105 042
- JP-U- S56 154 627
- JP-U- S56 154 627
- JP-Y2- S5 618 820

## Description

### Technical Field

This invention relates to a combustor of a simple structure capable of being reduced in size easily and suitable for a fuel cell for home use, and a fuel cell system that uses the combustor as a heating source.

### Background Art

A fuel cell system generally includes a cell module as a body of the fuel cell system and additionally, a reformer to generate hydrogen-rich fuel for power generation to be supplied to the cell module, a combustor to heat the cell module and the reformer, etc. The cell module is an aggregate of power generating elements. The cell module generates power in response to supply of fuel for power generation to a fuel electrode (anode) side of each power generating element and supply of oxidant gas to an air electrode (cathode) side of each power generating element. The reformer reforms raw fuel, which may be city gas, for example, of the fuel for power generation to hydrogen-rich fuel for power generation by making the raw fuel react with steam in a high-temperature catalyst.

The combustor uses unreacted fuel for power generation released from the fuel electrode (anode) side of each power generating element as combustion fuel and mixes the combustion fuel with unreacted oxidant gas released from the air electrode (cathode) side of each power generating element to produce combustion. Using combustion exhaust gas resulting from the combustion, the combustor heats the cell module and the reformer directly or indirectly. In this description, gases released from the cell module are collectively called off-gas irrespective of whether these gases are released during running of the cell module, before the running, or after the running. Gas released from the fuel electrode (anode) side of each power generating element is particularly called anode off-gas. Gas released from the air electrode (cathode) side of each power generating element is particularly called cathode off-gas.

A compact and low-cost fuel cell system is required in the market of fuel cells for home use. Thus, the fuel cell system is required to have a simple structure of a small number of components and a low parts count. From this viewpoint, the aforementioned combustor as an auxiliary unit of a fuel cell is also required to have a simple structure capable of being reduced in size easily.

However, a combustor of such a compact size as to be used in a fuel cell system for home use encounters an essential problem in that combustion becomes unstable due to reduction in an combustion volume resulting from the compact size of the combustor, for example. For simplification of a structure, a simple start-up method is employed frequently according to which fuel dedicated to a combustor is not used at the time of start-up but off-gas released from the cell module is used as raw material gas for combustion at the time of start-up, like in power generation running. This also becomes an additional cause for combustion instability.

The simple start-up method is described next. At an initial stage of start-up before or after ignition, raw fuel such as city gas to be fed the reformer passes as it is through the reformer. Then, this raw fuel passes through the fuel electrode (anode) side in the cell module and is fed to the combustor. The anode off-gas fed at this time is the raw fuel. In response to ignition, combustion exhaust gas starts to be released from the combustor to be fed to the reformer. As the temperature of the reformer starts to rise, reforming reaction starts at the reformer. After start of the reforming, hydrogen-rich reformed fuel for power generation passes through the fuel electrode (anode) side in the cell module and is fed to the combustor. The anode off-gas fed at this time is the fuel for power generation. After start of power generation, unreacted fuel for power generation is released from the fuel electrode (anode) side in the cell module and fed to the combustor. The anode off-gas fed at this time is the unreacted fuel for power generation.

At the time of start-up, oxidant gas (air) is released as it is from the air electrode (cathode) side in the cell module and fed to the combustor. The cathode off-gas fed at this time is the oxidant gas (air). After start of power generation, unreacted oxidant gas (air) is released and fed to the combustor. The cathode off-gas fed at this time is the unreacted oxidant gas (air).

According to the simple start-up method of using off-gas released from the cell module as raw material gas for combustion at the combustor not only during power generation running but also at the time of start-up, the flow rate of the raw material gas for combustion, particularly that of combustion fuel changes largely at this time of start-up. This causes an essential problem in that combustion at the combustor becomes unstable to increase the probability of the occurrence of misfire. Additionally, after temperature rise of the combustor resulting from ignition, for reduction in fuel cost, a standby mode of a reduced fuel flow rate called hot standby continues in a period to when power generation running is started. In this period, combustion at the combustor is high air ratio lean combustion using mixture of a high air ratio. Combustion instability is caused to increase the probability of the occurrence of misfire only by the largely changing fuel flow rate. The lean combustion makes combustion more unstable to further increase the probability of the occurrence of misfire. In the standby mode, misfire is a serious problem that should be avoided absolutely to prepare for power generation the timing of start of which is now known.

In response to the problem relating to unstable combustion due to reduction in a combustion area resulting from size reduction of the combustor, patent literature 1 presents a combustor for a fuel cell including catalyst ceramic disposed at a combustion part. According to this combustor, the catalyst ceramic heated to a catalyst activating temperature or more produces oxidizing reaction of mixture of fuel and air to stabilize combustion of the mixture. This contributes to combustion stabilization without the need of additionally preparing a burner circuit, making it possible to reduce the size of the combustor. However, even this combustor still finds difficultly in producing stable combustion under lean combustion using mixture of a high air ratio.

For the reason given above, in the field of fuel cells for home use, development of a combustor having a simple structure, reducing a risk of misfire, and capable of producing stable combustion even under lean combustion has been expected.

### Prior Art Literature

### Patent Literature

Patent Literature 1: Japanese Patent Application Publication No. 2007-322019

EP 1617140 A1 discloses a gas combustion device.

EP 1724524 A2 discloses a method for achieving low NOx single-stage combustion.

JP H09 296913 A discloses a perforated burner using a low pressure gas.

JP S56 154627 U discloses a gas burner comprising a heating cylinder of which an inner peripheral surface formed of a fire-resistant heating agent is mounted between a burner head having a burner port and a burner tile opening to an oven.

JP S50 105042 U discloses a gas burner wherein burner ports of a burner body are formed of porous bodies and each of the burner ports formed of the porous bodies is set to be longer the further the burner ports are from an inner wall of the burner body.

EP 0920064 A1 discloses a fuel cell system including a fuel reformer heated by a catalytic combustor.

### Summary of Invention

### Problem to be Solved by Invention

It is an object of this invention to provide a combustor effectively capable of avoiding combustion instability and misfire due to the combustion instability while having a simple structure and capable of being reduced in size easily, and a fuel cell system using the combustor as a heating source, capable of being reduced in size easily, and capable of running reliably.

### Means of Solving Problem

The present invention relates to the subject matter of claims 1 to 10. To achieve the aforementioned object, the combustor of this invention comprises: a gas channel for oxygen-containing gas passing; a partially shielding member disposed in the gas channel, the partially shielding member partially shielding the gas channel (partially shielding mentioned herein and hereinbelow means regulating the gas channel), thereby introducing part of the oxygen-containing gas passing the gas channel into an inside area of the partially shielding member, while allowing passage of residue of the oxygen-containing gas travel toward a downstream side of a gas passing direction (partially shielding member mentioned herein and hereinbelow means a regulating member); a primary combustion zone formed in the inside area of the partially shielding member for combusting combustion fuel supplied from outside in conjunction with the part of the oxygen-containing gas introduced into the primary combustion zone; and a secondary combustion zone formed in the gas channel on a downstream side of the gas passing direction relative to the primary combustion zone. In the secondary combustion zone, a porous ceramic body having heat resistance and gas permeability is disposed in the gas channel, an internal channel for introducing combustion exhaust gas generated in the primary combustion zone from an upstream side toward a downstream side of the gas passing direction is provided in the vicinity of a central portion of the porous ceramic body, and an external channel for introducing the oxygen-containing gas which has not been introduced into the primary combustion zone from an upstream side toward a downstream side of the gas passing direction is provided in the vicinity of an outer peripheral portion of the porous ceramic body.

In the combustor for a fuel cell of this invention, the combustion fuel and the part of the oxygen-containing gas passing the gas channel are first supplied into the primary combustion zone out of the primary and secondary combustion zones defined in two stages in the gas channel. This starts combustion in the primary combustion zone. This combustion is produced using the oxygen-containing gas of a limited quantity, so that it proceeds stably under a fuel-rich condition.

High-temperature combustion exhaust gas resulting from the combustion in the primary combustion zone mainly passes the internal channel in the vicinity of the central portion of particularly low gas flow resistance in the porous ceramic body disposed in the secondary combustion zone on a downstream side relative to the primary combustion zone. This heats the porous ceramic body to red heat mainly at a portion from an upstream-side end surface to the inner surface of the internal channel. This heating to read heat exhibits flame holding effect on the primary combustion zone on an upstream side relative to the secondary combustion zone. In this way, combustion in the primary combustion zone is stabilized further. This reduces a risk of misfire in the primary combustion zone, resulting in stable combustion and reduction in a risk of misfire in the secondary combustion zone.

In the secondary combustion zone, the combustion exhaust gas mainly passes the internal channel in the porous ceramic body and the residue of the oxygen-containing gas mainly passes the external channel in the vicinity of the outer peripheral portion of the porous ceramic body. While passing the external channel, the oxygen-containing gas diffuses from the outside of the porous ceramic body into the porous ceramic body. This intensifies combustion in the secondary combustion zone.

As described above, the combustor of this invention uses a combination of the second-stage combustion using a fuel-rich zone disposed in the primary combustion zone as a former stage and the flame holding effect produced by the porous ceramic body disposed in the secondary combustion zone as a latter stage. Thus, even if combustion in the secondary combustion zone is lean combustion for the reason that an air ratio of mixture introduced into the combustor is high, specifically, an air ratio of the oxygen-containing gas in the mixture relative to the combustion fuel is high, combustion can be produced stably both in the primary and secondary combustion zones, thereby reducing a risk of misfire. The resultant lean combustion is stable free from a risk of misfire, making it possible to generate a large quantity of combustion exhaust gas using a small quantity of combustion fuel.

The inner surface of the gas channel is cooled effectively with the oxygen-containing gas to prevent overheating of the inner surface of the gas channel. Additionally, the partially shielding member, which defines the primary combustion zone in the gas channel, functions as a branching member to introduce the part of the oxygen-containing air into the primary combustion zone. Thus, the structure of the combustor is simplified.

In the combustor of this invention, what is important for the porous ceramic body in the secondary combustion zone is to have both excellent heat resistance and excellent gas permeability. From this viewpoint, this porous ceramic body is preferably a porous ceramic body of a cancellous bone shape having a large pore size such as ceramic foam filter "SEDEX" available from FOSECO for casting of ferrous or non-ferrous metal. Like this "SEDEX," this porous ceramic body is preferably manufactured using a ceramic foam. The pore size is preferably from 2 to 20 pores per cm (5 to 50 ppi), more preferably, from 4 to 12 pores per cm (10 to 30 ppi) in terms of a pore density. If the pore size is too small, gas permeability is degraded. Conversely, if the pore size is too large, the flame holding effect produced by heating to red heat is reduced, causing a risk of reduction in mechanical strength. In terms of ensuring heat resistance and mechanical strength, examples of a preferred type of ceramic include zirconia, silicon carbide, cordierite, and aluminum titanate.

The porous ceramic body is configured to be disposed in the gas channel in such a manner as to contact the primary combustion zone on an upstream side of the gas passing direction relative to the porous ceramic body. This configuration heats the porous ceramic body in the secondary combustion zone to red heat intensely and stably to reinforce the flame holding effect produced by this heating. In this way, combustion is produced more stably and a risk of misfire is reduced more effectively.

The internal channel in the secondary combustion zone is a through hole formed in the vicinity of the central portion of the porous ceramic body. Thus, the combustion exhaust gas generated in the primary combustion zone passes the internal channel smoothly in the secondary combustion zone, thereby reinforcing heating to red heat of the porous ceramic body in the secondary combustion zone and the flame holding effect produced by this heating.

Preferably, the external channel in the secondary combustion zone is formed so as to be a gap between an outer peripheral surface of the porous ceramic body and an inner peripheral surface of the gas channel. Thus, the oxygen-containing gas passes the external channel smoothly in the secondary combustion zone along the inner surface of the gas channel, thereby enhancing the effect of cooling the inner surface of the gas channel.

Preferably, the partially shielding member, which defines the primary combustion zone in the gas channel, is a truncated conical member where a diameter is gradually increased from an upstream side toward a downstream side of the gas passing direction, a gas inlet for introducing the oxygen-containing gas is formed on the periphery of a central portion, and a fuel introduction pipe for introduction of the combustion fuel is connected to the central portion. By using this truncated conical member, the part of the oxygen-containing gas is introduced into the inside area of the truncated conical member through the gas inlet on the periphery of the central portion and the combustion fuel is introduced into the inside area of the truncated conical member through the fuel introduction pipe at the central portion. This forms accumulation of the oxygen-containing gas and the combustion fuel in the inside area of the truncated conical member, thereby forming a mixture environment suitable for stable combustion.

The truncated conical member may be formed as a support member to support the porous ceramic body disposed on a downstream side of the gas passing direction relative to the truncated conical member using an increased diameter side of the truncated conical member. Using the truncated conical member functioning as the support member for the porous ceramic body makes it possible to stably hold the porous ceramic body in a position contacting the primary combustion zone, while making it possible to reduce a parts count.

Preferably, the truncated conical member is configured to be disposed in the gas channel spaced between the inner peripheral surface of the gas channel and the truncated conical member. This configuration allows the truncated conical member to function as a guide member to guide the oxygen-containing gas passing the gas channel to the external channel in the secondary combustion zone. This can enhance the effect of cooling the inner surface of the gas channel.

The fuel cell system of this invention uses the combustor of this invention as a heating source. More specifically, the fuel cell system of this invention comprises: a cell module formed of an aggregate of a plurality of power generating elements, the cell module generating power using hydrogen-rich fuel for power generation supplied to one of electrodes in a pair of each of the power generating elements and oxidant gas supplied to the other of the electrodes; and the combustor of this invention to generate combustion exhaust gas to be used for heating of the cell module. The combustor uses off-gas released from the one electrode of each of the power generating elements in the cell module as the combustion fuel.

In the fuel cell system of this invention, the combustor of this invention is used as a heating source for the reformer, or for the cell module and the reformer. More specifically, the oxidant gas to be supplied to the other electrode in the cell module is heated in advance by heat exchange with the high-temperature combustion exhaust gas released from the combustor, thereby heating the cell module from inside. Further, radiant heat from the combustor heats the cell module from outside. The reformer can be heated by heat exchange with the high-temperature combustion exhaust gas released from the combustor.

The off-gas released from the one electrode of each of the power-generating elements in the cell module is used as the combustion fuel to be used for combustion at the combustor. Preferably, off-gas released from the other electrode of each of the power-generating elements in the cell module is used as the oxygen-containing gas to be used for combustion of the combustion fuel.

### Advantageous Effects of Invention

The combustor of this invention uses a combination of the second-stage combustion using a fuel-rich zone disposed in the primary combustion zone as a former stage and the flame holding effect produced by the porous ceramic body disposed in the secondary combustion zone as a latter stage. Thus, even if combustion in the secondary combustion zone is lean combustion, stable combustion can still be produced to reduce a risk of misfire. Thus, even if the simple start-up of using the off-gas released from the cell module as raw material gas for combustion at the combustor is employed not only in power generation running but also at the time of start-up, stable combustion is achieved and a fuel cell can be started reliably as a result of the stable combustion. In this way, employing the simple start-up contributes to increase in economic efficiency. Further, the inner surface of the gas channel is cooled with the oxygen-containing gas to prevent overheating of the inner surface of the gas channel. This eliminates the need for taking measure against overheating of the inner surface of the gas channel. Additionally, the partially shielding member, which defines the primary combustion zone in the gas channel, functions as a branching member to let part of the oxygen-containing air is introduced into the primary combustion zone. As a result, the structure of the combustor is simplified.

The fuel cell system of this invention uses this combustor having a simple structure, exhibiting excellent economic efficiency, and allowing stable combustion as a heating source. This achieves size reduction, excellent economic efficiency, and excellent reliability in the running operation of the fuel cell system. Thus, the fuel cell system of this invention is used suitably particularly in a compact fuel cell for home use, for example.

### Brief Description of Drawings

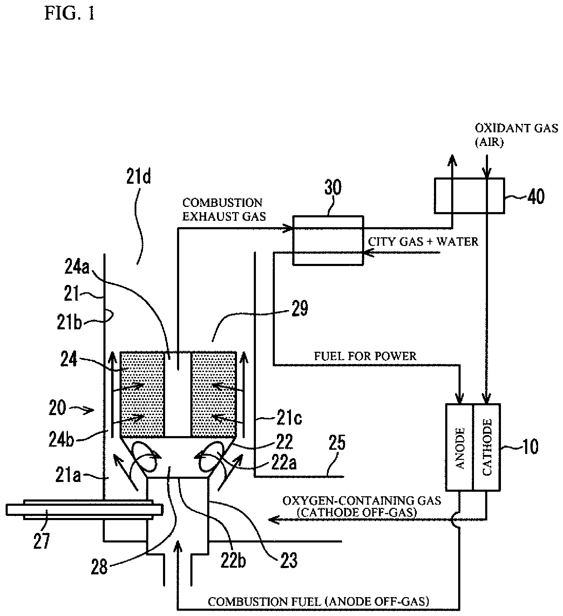

Fig. 1 is a conceptual view of the structure of a fuel cell system showing an embodiment of this invention and the structure of a combustor used in the fuel cell system.

### Embodiment for Carrying Out Invention

An embodiment of this invention is described below based on the drawings. A combustor of this embodiment is used for various types of heating in a fuel cell system. As shown in Fig. 1, the fuel cell system includes a cell module 10 forming a body of the fuel cell system, and a combustor 20 to perform various types of heating by producing combustion of exhaust gas released from the cell module 10. Here, targets of heating by the combustor 20 are a steam reformer 30 and an oxidant gas preheater 40.

The cell module 10 is formed by combining a large number of power generating elements called cells or single cells. A power generating element as a minimum constituent unit of a fuel cell has electrodes in a pair including a fuel electrode (anode) and an air electrode (cathode). Fuel for power generation is supplied to the air electrode (anode) side and air as oxidant gas is supplied to the air electrode (cathode) side of the electrodes in a pair, thereby generating power.

City gas as raw fuel of fuel for power generation is fed to the steam reformer 30. The fed city gas is mixed with steam and heated at the steam reformer 30 to be reformed to hydrogen-rich fuel for power generation. The fuel for power generation generated at the steam reformer 30 is supplied to the fuel electrode (anode) side of each of the large number of power generating elements in the cell module 10. Air as oxidant gas is supplied to the oxidant gas preheater 40 formed of a heat exchanger. The supplied air is heated in advance at the oxidant gas preheater 40 and supplied to the air electrode (cathode) side of each of the large number of power generating elements in the cell module 10. As described above, the combustor 20 functions as a source of heating of the steam reformer 30 and the oxidant gas preheater 40.

As shown in Fig. 1 in detail, the combustor 20 includes a vertical circular pipe 21, a circular partially shielding member 22 disposed in the circular pipe 21 to be concentric with the circular pipe 21, a vertical fuel supply pipe 23 connected to a central portion of the partially shielding member 22 from below to be concentric with the partially shielding member 22, and a porous ceramic body 24 like a flat circular cylinder disposed in the circular pipe 21 in such a manner as to be positioned above the partially shielding member 22.

The circular pipe 21 forms a vertical gas channel 21a inside the circular pipe 21 for passage of air as oxygen-containing gas introduced into a lower end portion of the circular pipe 21 from the bottom to the top. The upper end of the circular pipe 21 is opened as a combustion exhaust gas outlet 21d. The lower end of the circular pipe 21 is closed. A horizontal air supply pipe 25 is connected from a lateral side to the vicinity of the lower end of the circular pipe 21 and an ignitor 27 formed of a horizontal rod-shaped ignition plug is inserted from a lateral side to the vicinity of the lower end of the circular pipe 21. The ignitor 27 is inserted from the outside of the circular pipe 21 and penetrates the circular pipe 21 to reach the inside of the fuel supply pipe 23. An ignition part at the tip of the ignitor 27 borders space inside an upper end portion of the fuel supply pipe 23.

The partially shielding member 22 has a fuel supply port 22b formed at a central portion of its lower end and communicating with the inside of the fuel supply pipe 23. The partially shielding member 22 is a truncated conical member having an outer diameter gradually increased in an upward direction from the fuel supply port 22b. The partially shielding member 22 is disposed in the gas channel 21a in such a manner that a large diameter side of the partially shielding member 22 is pointed upward and a ring-shaped gap 21c is left between the partially shielding member 22 and an inner peripheral surface 21b of the gas channel 21a. The partially shielding member 22 is provided with a plurality of circular opening parts as gas inlets 22a arranged at regular intervals in a peripheral direction. The partially shielding member 22 formed of the truncated conical member defines a primary combustion zone 28 in the inside area of the partially shielding member 22. Space inside the circular pipe 21 (gas channel 21a) above the primary combustion zone 28 functions as a secondary combustion zone 29.

As described above, the porous ceramic body 24 has a flat circular cylindrical shape and is placed and fixed on the truncated conical member 22 functioning as a support member for the porous ceramic body 24 to be concentric with the truncated conical member 22. For stable placement and support of the porous ceramic body 24, the outer diameter of the porous ceramic body 24 is set to be slightly smaller than the outer diameter of the truncated conical member 22. By doing so, a ring-shaped gap is formed around the porous ceramic body 24 in such a manner as to be positioned between inner peripheral surface of the gas channel 21a and the porous ceramic body 24. This ring-shaped gap functions as an external channel 24b of the porous ceramic body 24. A through hole as an internal channel 24a is formed in a central portion of the porous ceramic body 24 along its center line to be concentric with the porous ceramic body 24.

An end surface of the porous ceramic body 24 on an upstream side of a gas passing direction, specifically, the bottom surface thereof is a boundary surface that defines the primary and secondary combustion zones 28 and 29. Space below this bottom surface, specifically, the inside area of the truncated conical member 22 on an upstream side relative to the bottom surface functions as the primary combustion zone 28. Space above this bottom surface, specifically, space inside the gas channel 21a on a downstream side relative to the bottom surface functions as the secondary combustion zone 29. The primary combustion zone 28 is an ignition zone where fuel-rich combustion is produced by mixing combustion fuel supplied from the fuel supply pipe 23 into the inside area of the partially shielding member 22 and part of oxygen-containing gas supplied into the circular pipe 21 (gas channel 21a) and having entered the partially shielding member 22. The secondary combustion zone 29 is a zone where originally intended combustion at strong heating power is produced by mixing combustion exhaust gas generated in the primary combustion zone 28 and residue of the oxygen-containing gas not having entered the partially shielding member 22.

The porous ceramic body 24 used herein is the ceramic foam filter "SEDEX" available from FOSECO mentioned above disposed in a runner for casting of ferrous or non-ferrous metal and used for filtration, rectification, noise reduction, etc. of molten metal. The pore size of this filter is larger than that of general porous ceramic and from 4 to 12 pores per cm (10 to 30 ppi) in terms of a pore density. Regarding the dimension of the porous ceramic body 24, compared to the inner diameter (30 mm) of the gas channel 21a, an outer diameter and an inner diameter (diameter of the internal channel 24a) are set at 25 mm and 5 mm respectively. Thus, a dimension of 2.5 mm is ensured as the width of the external channel 24b.

City gas as raw fuel of fuel for power generation is introduced and water is introduced into the steam reformer 30 as a target of heating by the combustor 20. For heating of the introduced city gas and water, the steam reformer 30 allows passage of high-temperature combustion exhaust gas released from the combustor 20. More specifically, the water is heated to evaporate and resultant steam is heated with the high-temperature combustion exhaust gas released from the combustor 20. The introduced city gas is mixed with the heated steam and heated, thereby reforming the city gas to the fuel for power generation with the steam. The reformed fuel is fed to the cell module 10.

The oxidant gas preheater 40 as a different target of heating by the combustor 20 is also a heat exchanger. The oxidant gas preheater 40 allows passage of the combustion exhaust gas after passing through the steam reformer 30 as a heating medium. Then, the oxidant gas preheater 40 heats air to be supplied as oxidant gas to the air electrode (cathode) side in the cell module 10 to a preheating temperature by heat exchange with this combustion exhaust gas. The preheated air is supplied to the air electrode (cathode) side in the cell module 10. The combustion exhaust gas having passed through the oxidant gas preheater 40 is emitted into the atmosphere through a gas processing catalyst not shown in the drawings.

The following describes operation and the function of the fuel cell system while focusing on the operation and the function of the combustor 20 used in this fuel cell system.

At the time of start-up and through running of the system, city gas as raw fuel of fuel for power generation is supplied to the steam reformer 30 and air as oxidant gas is supplied to the oxidant gas preheater 40.

At the time of start-up, the flow rate of the city gas and the flow rate of the air are increased first. The city gas supplied to the steam reformer 30 passes as it is through the reformer 30 to be introduced into the fuel electrode (anode) side in the cell module 10. Then, the city gas passes as it is through the fuel electrode (anode) side in the cell module 10 to become the anode off-gas. This anode off-gas is introduced into the fuel supply pipe 23 of the combustor 20 as combustion fuel. The air supplied to the oxidant gas preheater 40 passes as it is through the preheater 40 to be introduced into the air electrode (cathode) side in the cell module 10. Then, the air passes as it is through the air electrode (cathode) side in the cell module 10 to become the cathode off-gas. This cathode off-gas is introduced into the air supply pipe 25 of the combustor 20 as oxygen-containing gas.

In this way, in the combustor 20, the city gas is introduced into the fuel supply pipe 23 and the air is introduced into the air supply pipe 25. The city gas having been introduced into the fuel supply pipe 23 goes up in this pipe to be introduced into the inside area of the partially shielding member 22 through the fuel supply port 22b at the central portion of the partially shielding member 22. The air having been introduced into the air supply pipe 25 passes through this pipe to be introduced into the gas channel 21 a in the circular pipe 21 through a lower end portion of the gas channel 21a. While the air having been introduced into the gas channel 21a goes up in the gas channel 21a, part of this air is introduced into the primary combustion zone 28 in the inside area of the partially shielding member 22 through the gas inlets 22a of the partially shielding member 22. Residue of this air goes up along the outer peripheral surface of the partially shielding member 22 to be introduced into the external channel 24b from below formed around the porous ceramic body 24 in the secondary combustion zone 29.

In this state, the ignitor 27 inserted in the upper end portion of the fuel supply pipe 23 is actuated. This starts combustion in the primary combustion zone 28. Combustion exhaust gas resulting from the combustion is introduced into the secondary combustion zone 29 on a downstream side relative to the primary combustion zone 28 to go from the bottom to the top mainly in the internal channel 24 of the porous ceramic body 24 in the secondary combustion zone 29. This heats the porous ceramic body 24 to red heat mainly at a portion from its lower surface to the lower inner surface of the internal channel 24.

In the secondary combustion zone 29, the air having been introduced into the external channel 24b formed around the porous ceramic body 24 is introduced into the porous ceramic body 24 from the periphery while going up in the external channel 24b. This activates combustion in and above the porous ceramic body 24 to increase heating power. Thus, the temperature of the combustion exhaust gas is increased and the quantity of the combustion exhaust gas is increased. As a result, a large quantity of the high-temperature combustion exhaust gas is emitted through the combustion exhaust gas outlet 21d at the upper end of the secondary combustion zone 29 to the outside of the secondary combustion zone 29. Further, heating to red heat of the porous ceramic body 24 develops.

A large quantity of the high-temperature combustion exhaust gas generated in the secondary combustion zone 29 is fed as a heating medium to the steam reformer 30 to heat the steam reformer 30 from inside. Then, this combustion exhaust gas is be introduced into the oxidant gas preheater 40. A large quantity of the high-temperature combustion exhaust gas having been introduced into the oxidant gas preheater 40 preheats air to be supplied to the air electrode (cathode) side in the cell module 10, thereby increasing the temperature of the cell module 10.

The steam reformer 30 is increased in temperature by being heated with a large quantity of the high-temperature combustion exhaust gas. When the temperature of the steam reformer 30 reaches a reforming temperature or a temperature near the reforming temperature, supply of water into the steam reformer 30 starts and the supplied water evaporates to generate steam. This steam is heated to raise its temperature. Then, the city gas is mixed with the high-temperature steam and heated in a catalyst. In this way, the city gas is reformed with the steam to fuel for power generation. As a result, the city gas (raw fuel) to be introduced into the fuel electrode (anode) side in the cell module 10 is switched to the fuel for power generation. The combustion fuel to be introduced into the combustor 20 is also switched from the city gas (raw fuel) to the fuel for power generation. In this way, combustion continues at the combustor 20.

As the temperature of the cell module 10 is raised further with the heated air, the flow rate mainly of the city gas is reduced to enter a standby period called hot standby. The combustion in the secondary combustion zone 29 is lean combustion at a high air ratio. Meanwhile, the combustion in the primary combustion zone 28 in the inside area of the partially shielding member 22 is fuel-rich combustion at a low air ratio resulting from a limited quantity of air, thereby contributing to combustion stabilization. The porous ceramic body 24, disposed in the secondary combustion zone 29 in such a manner as to contact the primary combustion zone 28, is heated to red heat. This reduces a risk of misfire in the primary combustion zone 28.

To start power generation, the flow rate mainly of the city gas is increased. When the power generation starts in the cell module 10, the anode-off gas released from the fuel electrode (anode) side in the cell module 10 is switched from the fuel for power generation to unburned fuel for power generation. This anode off-gas is fed as combustion fuel to the combustor 20. Further, the cathode off-gas released from the air electrode (cathode) side in the cell module 10 is switched from the oxidant gas (air) for power generation to unburned oxidant gas (air). This cathode off-gas is fed as oxygen-containing gas to the combustor 20.

In this way, combustion continues at the combustor 20 during power generation running. During this combustion, stable combustion is achieved in the primary combustion zone 28 by the second-stage combustion using the fuel-rich primary combustion zone 28 disposed on an upstream side relative to the secondary combustion zone 29 and flame holding effect produced by heating to red heat of the porous ceramic body 24 disposed in the secondary combustion zone 29 in such a manner as to contact the primary combustion zone 28. Further, the stable combustion in the primary combustion zone 28 achieves stable combustion in the secondary combustion zone 29. In this way, combustion continues stably as a whole. Thus, during the power generation running, a large quantity of the high-temperature combustion exhaust gas is also supplied as a heating medium to the steam reformer 30 to contribute to reforming reaction at the steam reformer 30 and generation of the fuel for power generation resulting from the reforming reaction.

A large quantity of the high-temperature combustion exhaust gas is also fed to the oxidant gas preheater 40. Meanwhile, the cell module 10 generates heat during the power generation running. Thus, profit of preheating the oxidant gas with the combustion exhaust gas is smaller during the power generation running than at the time of start-up.

As described above, in the combustor 20 of this embodiment, the simple start-up mode of using the off-gas released from the cell module as raw material gas for combustion at the combustor 20 is executed not only in power generation running but also at the time of start-up. According to the simple start-up mode, the flow rate of combustion fuel changes largely. Additionally, combustion in this mode is lean combustion resulting from the reduced the flow rate of the combustion fuel.

In the combustor 20, however, by using a combination of the second-stage combustion using a fuel-rich zone disposed in the primary combustion zone 28 as a former stage and the flame holding effect produced by the porous ceramic body 24 disposed in the secondary combustion zone 29 as a latter stage, stable combustion is achieved even combustion in the secondary combustion zone 29 is lean combustion to reduce a risk of misfire. Thus, even in the simple start-up mode, stable combustion is achieved and a fuel cell can be started more reliably as a result of the stable combustion. In this way, employing the simple start-up mode contributes to increase in economic efficiency.

The inner surface of the gas channel 21a is cooled with oxygen-containing gas to prevent overheating of the inner peripheral surface 21b of the gas channel 21a. This eliminates the need for taking measure against overheating of the inner peripheral surface 21b. Additionally, the partially shielding member 22, which defines the primary combustion zone 28 in the gas channel 21a, functions as a branching member to allow passage of part of oxygen-containing air into the primary combustion zone 28. These serve to simplify the structure of the combustor 20.

The fuel cell system of this embodiment uses the combustor 20 having a simple structure, exhibiting excellent economic efficiency, and allowing stable combustion as a heating source for the cell module 10 and the steam reformer 30. This achieves size reduction, more excellent economic efficiency, and excellent reliability in the running operation of the fuel cell system. Thus, the fuel cell system of this embodiment is used suitably particularly in a compact fuel cell for home use, for example.

A start-up method employed by the aforementioned embodiment is the simple start-up method and this invention works effectively particularly in this method. Meanwhile, this invention still produces the effect of stabilizing combustion and works effectively even in the case where a start-up method employed by the aforementioned embodiment is to use fuel for power generation such as city gas as fuel for combustion at the combustor 20 at the time of start-up that is to be supplied to the combustor 20 along a route not going through the cell module 10.

### Reference Signs List

- 10: Cell module
- 20: Combustor
- 21: Circular pipe
- 21a: Gas channel
- 21b: Inner peripheral surface
- 21c: Gap
- 21d: Combustion exhaust gas outlet
- 22: Partially shielding member
- 22a: Gas inlet
- 22b: Fuel supply port
- 23: Fuel supply pipe
- 24: Porous ceramic body
- 24a: Internal channel
- 24b: External channel
- 25: Air supply pipe
- 27: Ignitor
- 28: Primary combustion zone
- 29: Secondary combustion zone
- 30: Steam reformer
- 40: Oxidant gas preheater

## Claims

1. A combustor (20) comprising:
a gas channel (21a) for oxygen-containing gas passing;
a regulating member (22) disposed in the gas channel (21a), the regulating member (22) partially shielding the gas channel (21a), thereby introducing part of the oxygen-containing gas passing the gas channel (21a) into an inside area of the regulating member (22), while allowing passage of residue of the oxygen-containing gas toward a downstream side of a gas passing direction;
a primary combustion zone (28) formed in the inside area of the regulating member (22) for combusting combustion fuel supplied from outside in conjunction with the part of the oxygen-containing gas introduced into the primary combustion zone (28); and
a secondary combustion zone (29) formed in the gas channel (21a) on a downstream side of the gas passing direction relative to the primary combustion zone (28), wherein in the secondary combustion zone (29),
a porous ceramic body (24) having heat resistance and gas permeability is disposed in the gas channel,
an internal channel (24a) for introducing combustion exhaust gas generated in the primary combustion zone (28) from an upstream side toward a downstream side of the gas passing direction is provided in the vicinity of a central portion of the porous ceramic body (24), and
an external channel (24b) for introducing the residue of the oxygen-containing gas which has not been introduced into the primary combustion zone (28) from an upstream side toward a downstream side of the gas passing direction is provided in the vicinity of an outer peripheral portion of the porous ceramic body (24), such that the residue of the oxygen-containing gas which has not been introduced into the primary combustion zone (28) diffuses from the outside of the porous ceramic body into the porous ceramic body, wherein
the porous ceramic body (24) in the secondary combustion zone (29) is disposed in the gas channel (21a) in such a manner as to contact the primary combustion zone (28) on an upstream side of the gas passing direction relative to the porous ceramic body (24), and wherein
the internal channel (24a) in the secondary combustion zone (29) is a through hole formed in the vicinity of the central portion of the porous ceramic body (24).

2. The combustor (20) according to claim 1, wherein the pore size of the porous ceramic body (24) is from 2 to 20 pores per cm (5 to 50 ppi).

3. The combustor (20) according to claim 1 or 2, wherein
the external channel (24b) in the secondary combustion zone (29) is formed so as to be a gap (21b) between an outer peripheral surface of the porous ceramic body (24) and an inner peripheral surface (21b) of the gas channel (21a).

4. The combustor (20) according to any one of claims 1 to 3, wherein
the regulating member (22) is a truncated conical member where a diameter is gradually increased from an upstream side toward a downstream side of the gas passing direction, a gas inlet (22a) for introducing the oxygen-containing gas is formed on the periphery of a central portion of the regulating member (22), and a fuel introduction pipe for introducing the combustion fuel is connected to the central portion.

5. The combustor (20) according to claim 4, wherein
the truncated conical member is formed as a support member to support the porous ceramic body (24) disposed on a downstream side of the gas passing direction relative to the truncated conical member using an increased diameter side of the truncated conical member.

6. The combustor (20) according to claim 4 or 5, wherein
the truncated conical member is disposed such that the external channel (24b) for the oxygen-containing gas which has not been introduced into the primary combustion zone (28) is formed between an inner peripheral surface (21b) of the gas channel (21a) and the truncated conical member.

7. The combustor (20) according to claim 6, wherein
the truncated conical member functions as a guide member to guide the oxygen-containing gas passing the gas channel to the external channel (24b) in the secondary combustion zone (29).

8. A fuel cell system comprising:
a cell module (10) formed an aggregate having a plurality of power generating elements, the cell module (10) generating power using hydrogen-rich fuel for power generation supplied to one of electrodes in a pair of each of the power generating elements and oxidant gas supplied to the other of the electrodes; and
the combustor (20) as recited in any one of claims 1 to 7 to generate combustion exhaust gas for heating the cell module (10), wherein
the combustor (20) uses off-gas released from the one electrode of each of the power generating elements in the cell module (10) as the combustion fuel.

9. The fuel cell system according to claim 8, wherein
the combustor (20) uses off-gas released from the other electrode of each of the power generating elements in the cell module (10) as the oxygen-containing gas.

10. The fuel cell system according to claim 8 or 9, comprising a steam reformer including a reforming part for generating the fuel for power generation in response to supplying steam resulting from heating of water in conjunction with raw fuel and to heating both the steam and the raw fuel, wherein
the steam reformer uses the combustion exhaust gas released from the secondary combustion zone (29) of the combustor (20) for heating the raw fuel and the steam.

## Patentansprüche

1. Brenner (20), umfassend:
einen Gaskanal (21a) zum Durchleiten von Sauerstoff-haltigem Gas;
ein Regulierungselement (22), das in dem Gaskanal (21a) angeordnet ist, wobei das Regulierungselement (22) den Gaskanal (21a) teilweise abschirmt, um dadurch einen Teil des Sauerstoff-haltigen Gases, dass den Gaskanal (21a) durchströmt, in einen inneren Bereich des Regulierungselements (22) einzuleiten, während ermöglicht wird, dass der Rest des Sauerstoff-haitigen Gases in Richtung der stromabwärtigen Seite der Strömungsrichtung des Gases durchgeleitet wird;
eine erste Verbrennungszone (28), die in dem inneren Bereich des Regulierungselements (22) ausgebildet ist, um den Verbrennungskraftstoff, der von außen zugeführt wird, in Verbindung mit dem Teil des Sauerstoff-haltigen Gases, das in die erste Verbrennungszone (28) eingeleitet wird, zu verbrennen; und
eine zweite Verbrennungszone (29), die in dem Gaskanal (21a) auf der stromabwärtigen Seite der Strömungsrichtung des Gases, relativ zu der ersten Verbrennungszone (28) ausgebildet ist, wobei in der zweiten Verbrennungszone (29)
ein poröser Keramikkörper (24), der Wärmebeständigkeit und Gasdurchlässigkeit besitzt, in dem Gaskanal angeordnet ist,
wobei ein innerer Kanal (24a) zum Einleiten des Abgases der Verbrennung, das in der ersten Verbrennungszone (28) erzeugt wurde, von der stromaufwärtigen Seite in Richtung der stromabwärtigen Seite der Strömungsrichtung des Gases, in der Nähe des zentralen Abschnitts des porösen Keramikkörpers (24) bereitgestellt wird, und
wobei ein äußerer Kanal (24b) zum Einleiten des Rests des Sauerstoff-haltigen Gases, das nicht in die erste Verbrennungszone (28) eingeleitet wurde, von der stromaufwärtigen Seite in Richtung der stromabwärtigen Seite der Strömungsrichtung des Gases, in der Nähe des äußeren Umfangsanteils des porösen Keramikkörpers (24) bereitgestellt wird, derart, dass der Rest des Sauerstoff-haltigen Gases, das nicht in die erste Verbrennungszone (28) eingeleitet wurde, von der Außenseite des porösen Keramikkörpers in den porösen Keramikkörper diffundiert, wobei
der poröse Keramikkörper (24) in der zweiten Verbrennungszone (29) auf eine solche Weise in dem Gaskanal (21a) angeordnet ist, dass dieser einen Kontakt mit der ersten Verbrennungszone (28) auf der stromaufwärtigen Seite der Strömungsrichtung des Gases relativ zu dem porösen Keramikkörper (24) herstellt, und wobei
der innere Kanal (24a) in der zweiten Verbrennungszone (29) ein Durchgangsloch ist, das in der Nähe des zentralen Abschnitts des porösen Keramikkörpers (24) ausgebildet ist.

2. Brenner (20) nach Anspruch 1, wobei die Porengröße des porösen Keramikkörpers (24) von 2 bis 20 Poren pro cm (5 bis 50 ppi) beträgt.

3. Brenner (20) nach Anspruch 1 oder 2, wobei der äußere Kanal (24b) in der zweiten Verbrennungszone (29) so ausgebildet ist, dass er ein Spalt (21c) zwischen der äußeren Umfangsfläche des porösen Keramikkörpers (24) und der inneren Umfangsfläche (21b) des Gaskanals (21a) ist.

4. Brenner (20) nach einem der Ansprüche 1 bis 3, wobei das Regulierungselement (22) ein kegelstumpfförmiges Element ist, bei dem der Durchmesser allmählich von der stromaufwärtigen Seite in Richtung der stromabwärtigen Seite der Strömungsrichtung des Gases zunimmt, wobei ein Gaseinlass (22a) zum Einleiten des Sauerstoff-haltigen Gases im Randbereich des zentralen Abschnitts des Regulierungselements (22) ausgebildet ist, und eine Kraftstoffzuleitung zum Einleiten des Verbrennungskraftstoffs mit dem zentralen Abschnitt verbunden ist.

5. Brenner (20) nach Anspruch 4, wobei das kegelstumpfförmige Element als Stützelement ausgebildet ist, um den porösen Keramikkörper (24) zu stützen, der auf der stromabwärtigen Seite der Strömungsrichtung des Gases relativ zu dem kegelstumpfförmigen Element angeordnet ist, wobei die vergrößerte Seite des Durchmessers des kegelstumpfförmigen Elements verwendet wird.

6. Brenner (20) nach Anspruch 4 oder 5, wobei das kegeistumpfförmige Element derart angeordnet ist, das der äußere Kanal (24b) für das Sauerstoff-haltige Gas, das nicht in die erste Verbrennungszone (28) eingeleitet wurde, zwischen der inneren Umfangsfläche (21b) des Gaskanals (21a) und dem kegelstumpfförmigen Element ausgebildet wird.

7. Brenner (20) nach Anspruch 6, wobei das kegelstumpfförmige Element als Führungselement fungiert, um das Sauerstoff-haltige Gas, das den Gaskanal zu dem äußeren Kanal (24b) in der zweiten Verbrennungszone (29) durchströmt, zu leiten.

8. Brennstoffzellen-System, umfassend:
ein Zellenmodul (10), das ein Aggregat mit einer Vielzahl an stromerzeugenden Elementen bildet, wobei das Zellenmodul (10) Strom unter Verwendung von Wasserstoff-reichem Kraftstoff für die Stromerzeugung, der einer der Elektroden in einem Paar jedes der stromerzeugenden Elemente zugeführt wird und von Oxidatorgas, das den anderen der Elektroden zugeführt wird, erzeugt; und
ein Brenner (20) nach einem der Ansprüche 1 bis 7, um Verbrennungsabgas zum Erwärmen das Zellenmoduls (10) zu erzeugen, wobei
in dem Brenner (20) das Abgas, das aus einer Elektrode eines jeden der stromerzeugenden Elemente in dem Zellenmodul (10) freigesetzt wurde, als Verbrennungskraftstoff verwendet wird.

9. Brennstoffzellen-System nach Anspruch 8, wobei in dem Brenner (20) das Abgas, das aus der anderen Elektrode eines jeden der stromerzeugenden Elemente in dem Zellenmodul (10) freigesetzt wurde, als Sauerstoff-haltiges Gas verwendet wird.

10. Brennstoffzellen-System nach Anspruch 8 oder 9, umfassend einen Dampfreformer, der einen Reformierungsabschnitt zur Erzeugung des Kraftstoffs für die Stromerzeugung einschließt, in Antwort auf das Zuführen von Dampf, der aus dem Erwärmen von Wasser in Verbindung mit dem rohen Kraftstoff und dem Erwärmen sowohl des Dampfes als auch des rohen Kraftstoffs resultiert, wobei in dem Dampfreformer das Verbrennungsabgas, das aus der zweiten Verbrennungszone (29) dem Brenner (20) freigesetzt wurde, verwendet wird, um den rohen Kraftstoff und den Dampf zu erwärmen.

## Revendications

1. Chambre de combustion (20) comprenant :
un conduit de gaz (21a) pour le passage d'un gaz contenant de l'oxygène ;
un élément de régulation (22) qui est disposé dans le conduit de gaz (21a), l'élément de régulation (22) faisant en partie écran dans le conduit de gaz (21a), introduisant ainsi une partie du gaz contenant de l'oxygène qui passe dans le conduit de gaz (21a) dans une zone intérieure dudit élément de régulation (22), tout en permettant le passage de résidus du gaz contenant de l'oxygène vers un côté aval d'un sens de passage du gaz ;
une zone de combustion primaire (28) qui est formée dans la zone intérieure de l'élément de régulation (22) pour la combustion de combustible amené de l'extérieur, conjointement avec la part de gaz contenant de l'oxygène qui est introduite dans la zone de combustion primaire (28) ; et
une zone de combustion secondaire (29) qui est formée dans le conduit de gaz (21a) sur un côté aval du sens de passage du gaz, par rapport à la zone de combustion primaire (28), étant précisé que dans la zone de combustion secondaire (29),
un corps céramique poreux (24) qui présente une résistance à la chaleur et une perméabilité au gaz est disposé dans le conduit de gaz,
un conduit intérieur (24a) pour introduire, d'un côté amont vers un côté aval du sens de passage du gaz, des gaz d'échappement de combustion produits dans la zone de combustion primaire (28) est prévu à proximité d'une partie centrale du corps céramique poreux (24), et
un conduit extérieur (24b) pour introduire, d'un côté amont vers un côté aval du sens de passage de gaz, les résidus du gaz contenant de l'oxygène qui n'a pas été introduit dans la zone de combustion primaire (28), est prévu à proximité d'une partie périphérique extérieure du corps céramique poreux (24), de sorte que les résidus du gaz contenant de l'oxygène qui n'a pas été introduit dans la zone de combustion primaire (28) se diffusent, de l'extérieur du corps céramique poreux, dans le corps céramique poreux, étant précisé que
le corps céramique poreux (24) prévu dans la zone de combustion secondaire (29) est disposé dans le conduit de gaz (21a) de manière à être en contact avec la zone de combustion primaire (28) sur un côté amont du sens de passage du gaz par rapport au corps céramique poreux (24), et que
le conduit intérieur (24a) prévu dans la zone de combustion secondaire (29) est un perçage traversant qui est formé à proximité de la partie centrale du corps céramique poreux (24).

2. Chambre de combustion (20) selon la revendication 1, dans lequel la taille des pores du corps céramique poreux (24) est de 2 à 20 pores par cm (5 à 50 ppi).

3. Chambre de combustion (20) selon la revendication 1 ou 2, dans lequel le conduit extérieur (24b) prévu dans la zone de combustion secondaire (29) est formé de manière à être un espace (21b) entre une surface périphérique extérieure du corps céramique poreux (24) et une surface périphérique intérieure (21b) du conduit de gaz (21a).

4. Chambre de combustion (20) selon l'une quelconque des revendications 1 à 3, dans lequel l'élément de régulation (22) est un élément tronconique dans lequel le diamètre augmente progressivement d'un côté amont vers un côté aval du sens de passage du gaz, un orifice d'admission de gaz (22a) pour l'introduction du gaz contenant de l'oxygène est formé sur la périphérie d'une partie centrale de l'élément de régulation (22), et un tuyau d'introduction de combustible pour l'introduction du combustible est relié à la partie centrale.

5. Chambre de combustion (20) selon la revendication 4, dans lequel l'élément tronconique est formé comme élément de support pour supporter le corps céramique poreux (24) disposé sur un côté aval du sens de passage de gaz par rapport à l'élément tronconique, en utilisant un côté de diamètre augmenté dudit élément tronconique.

6. Chambre de combustion (20) selon la revendication 4 ou 5, dans lequel l'élément tronconique est disposé de telle sorte que le conduit extérieur (24b) pour le gaz contenant de l'oxygène qui n'a pas été introduit dans la zone de combustion primaire (28) est formé entre une surface périphérique intérieure (21b) du conduit de gaz (21a) et l'élément tronconique.

7. Chambre de combustion (20) selon la revendication 6, dans lequel l'élément tronconique sert d'élément de guidage pour guider le gaz contenant de l'oxygène qui passe dans le conduit de gaz vers le conduit extérieur (24b) dans la zone de combustion secondaire (29).

8. Système de pile à combustible comprenant :
un module de pile (10) qui se compose d'un agrégat comportant plusieurs éléments producteurs d'électricité, le module de pile (10) produisant de l'électricité à l'aide d'un combustible riche en hydrogène pour une production d'électricité fournie à l'une des électrodes dans une paire de chacun des éléments producteurs d'électricité, et d'un gaz oxydant fourni à l'autre des électrodes ; et
la chambre de combustion (20) telle qu'elle est présentée dans l'une quelconque des revendications 1 à 7, pour produire des gaz d'échappement de combustion pour chauffer le module de cellule (10),
la chambre de combustion (20) utilisant comme combustible les effluents gazeux dégagés à partir d'une électrode de chacun des éléments producteurs d'électricité dans le module de cellule (10).

9. Système de pile à combustible selon la revendication 8, dans lequel la chambre de combustion (20) utilise comme gaz contenant de l'oxygène les effluents gazeux dégagés à partir de l'autre électrode de chacun des éléments producteurs d'électricité dans le module de cellule (10).

10. Système de pile à combustible selon la revendication 8 ou 9, comprenant un reformeur à vapeur qui contient une partie de reformage pour produire le combustible pour la production électrique en réaction à l'amenée de vapeur qui résulte du réchauffement de l'eau, conjointement avec un combustible brut, et au réchauffement à la fois de la vapeur et du combustible brut,
le reformeur à vapeur utilisant les gaz d'échappement de combustion dégagés à partir de la zone de combustion secondaire (29) de la chambre de combustion (20) pour chauffer le combustible brut et la vapeur.
